# FASCICULE DE BREVET EUROPEEN

(11) **EP 0 640 865 B1**
(45) Date de publication et mention de la délivrance du brevet: **27.09.2000**
(21) Numéro de dépôt: 94401897.7
(22) Date de dépôt: 25.08.1994
(51) Int. Cl.: G02F 1/313, G02B 6/12, G02B 6/28

(54) **Commutateur optique à basculement**
Digitaler optischer Schalter
Digital optical switch

(30) Priorité: 30.08.1993 FR 9310367
(43) Date de publication de la demande: 01.03.1995
(73) Titulaire: ALCATEL, 75008 Paris (FR)
(72) Inventeur: Vinchant, Jean-François, F-91680 Bruyères le Chatel (FR); Renaud, Monique, F-91530 Saint Cheron (FR)
(74) Mandataire: Fournier, Michel Robert Marie

(56) Documents cités:
- EP-A- 0 425 991
- ELECTRONICS LETTERS., vol.28, no.12, Juin 1992, STEVENAGE GB pages 1135 - 1137, XP000304636 Vinchant J F et al 'Low driving voltage or current digital optical switch on InP for multiwavelength system applications'
- ELECTRONICS LETTERS., vol.27, no.9, Avril 1991, STEVENAGE GB pages 699 - 700, XP000186217 Cavailles J A et al 'First digital optical switch based on InP/GaInAsP double heterostructure waveguides'
- JOURNAL OF LIGHTWAVE TECHNOLOGY., vol.11, no.2, Février 1993, NEW YORK US pages 379 - 387 Okayama H et al 'Reduction of voltage-length product for Y-branch digital optical switch'

## Description

La présente invention concerne un commutateur optique. Un tel commutateur possède une entrée optique et deux sorties optiques et il reçoit un signal électrique de commande. Il couple cette entrée à l'une ou l'autre de ces sorties, la sortie couplée étant sélectionnée par ce signal électrique.

De tels commutateurs sont notamment utilisés dans des réseaux de télécommunications optiques pour constituer des matrices de commutation. Il est souhaité que ces matrices présentent de fortes capacités et soient compatibles avec un multiplexage en longueur d'onde. Il convient pour cela de réaliser un commutateur optique à spectre large, peu sensible à la polarisation, présentant de faibles pertes d'insertion, et surtout présentant un taux d'extinction élevé. Ce taux est le rapport de la puissance lumineuse apparaissant sur la sortie sélectionnée à celle qui apparait sur l'autre sortie.

Des coupleurs optiques directionnels sont connus. Ils présentent un tel taux d'extinction élevé. Mais ils sont sensibles à la polarisation et présentent un spectre étroit.

Des commutateurs optiques à basculement sont aussi connus et sont généralement appelés "DOS" d'après l'anglais "Digital Optical Switch" c'est à dire commutateur optique numérique. Leur structure est conforme au préambule de la revendication 1 ci-après et elle est décrite dans deux articles
- J.F. Vinchant et al., "Low Driving Voltage or Current Digital Optical Switch on InP for Multiwavelength System Applications", Electronics Letters 28(12), pp. 1135-7.
- J.A. Cavailiès et al., "First Digital Optical Switch Based on InP/GaInAsP Double Heterostructure Waveguides", Electronics Letters 27(9), pp. 699-700.
   Ils sont insensibles à la polarisation. Quant à leur taux d'extinction des modifications leur ont été apportées pour augmenter ce taux. Elles ont été notamment décrites dans un article :
- H. Okayama et al., "Reduction of Voltage-length Product for Y-Branch Digital Optical Switch", Journal of Lightwave Technology, Vol. 11, N° 2, February 1993, p. 379-387,

D'autre part le taux d'extinction de ces commutateurs à basculement peut être augmenté par élévation de la puissance du signal de commande. Mais une telle élévation est coûteuse et peut créer des problèmes d'évacuation de chaleur notamment dans le cas d'une matrice de commutation de forte capacité. C'est pourquoi en pratique le taux d'extinction des commutateurs optiques à basculement connus reste trop faible pour les besoins ressentis.

La présente invention a notamment pour but d'augmenter le taux d'extinction d'un commutateur optique à basculement, ceci de manière simple et sans élévation de la puissance d'un signal de commande. Elle a aussi pour but de permettre ainsi la réalisation de matrices de commutation optique à capacités accrues.

Dans ces buts elle a pour objet un commutateur optique à basculement dans lequel un guide d'entrée et deux guides de sortie divergents constituent une structure guidante présentant entre ces deux guides de sortie un intervalle médian constituant une lacune de guidage, des électrodes permettant de commander sélectivement des indices de réfraction effectifs de ces deux guides de sortie pour coupler ce guide d'entrée à l'un et/ou l'autre de ces guides de sortie selon la valeur d'un signal de commande, ce commutateur étant caractérisé conformément à l'une quelconque des revendications ci-après.

La modification qui conduit à la structure guidante d'un tel commutateur à partir de celle des commutateurs à basculerment connus peut être appelée "aménagement de lacune" en ce sens qu'elle affecte la lacune de guidage dans une zone de transition dite "aménagée" pour que cotte lacune présente dans cette zone une variation de la largeur plus progressive que dans la zone correspondante des commutateurs connus.

De tels aménagements de lacune peuvent être constitués par un évidement médian de l'extrémité du guide d'entrée, et/ou par une variation progressive de l'inclinaison de deux bords en regard qui appartiennent respectivement aux deux guides de sortie.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.
La figure 1 représente une vue en perspective d'un commutateur réalisé selon la présente invention.
La figure 2 représente une vue en plan de la structure guidante de ce commutateur.
La figure 3 représente une vue en plan de la structure guidante d'un commutateur optique à basculement connu.

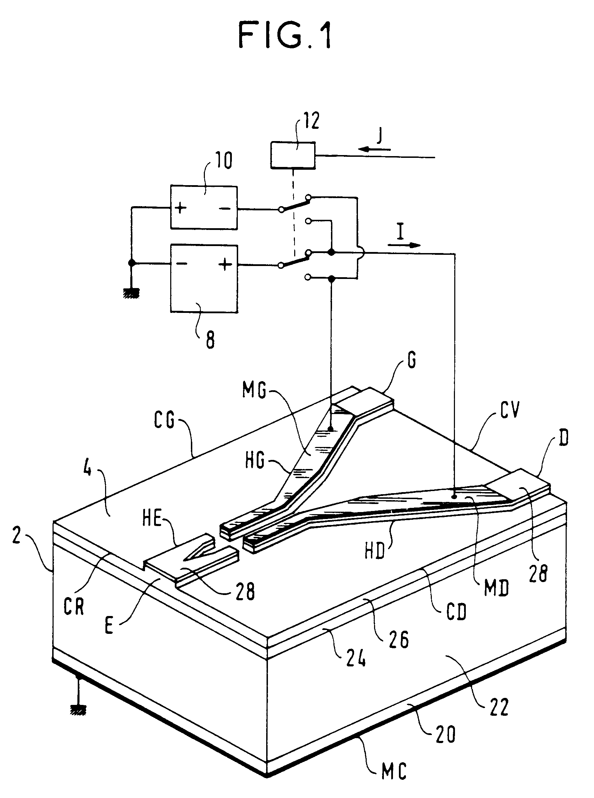

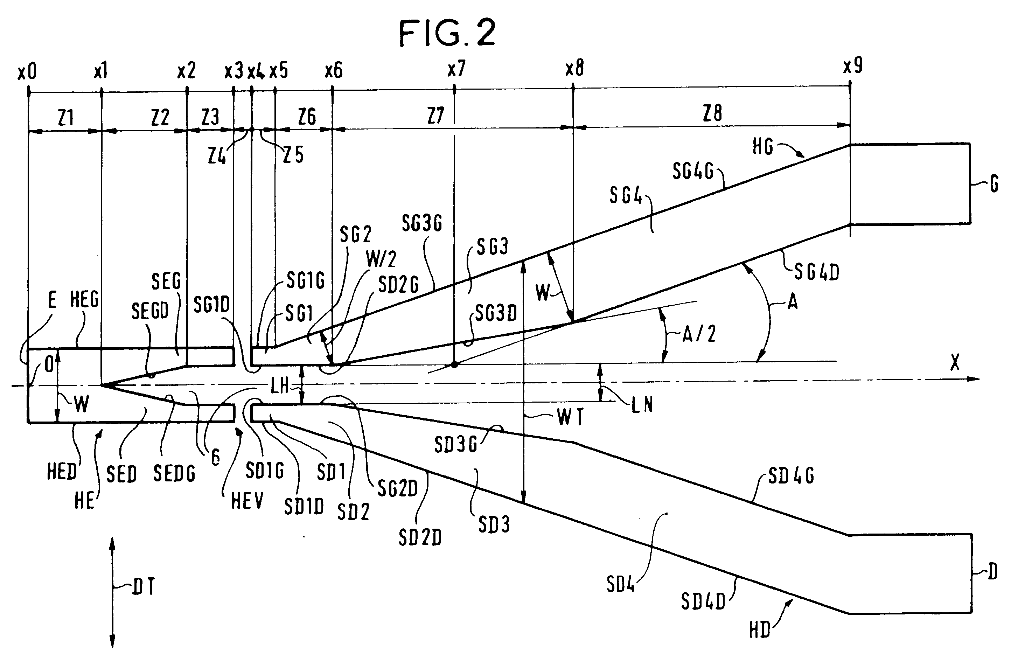

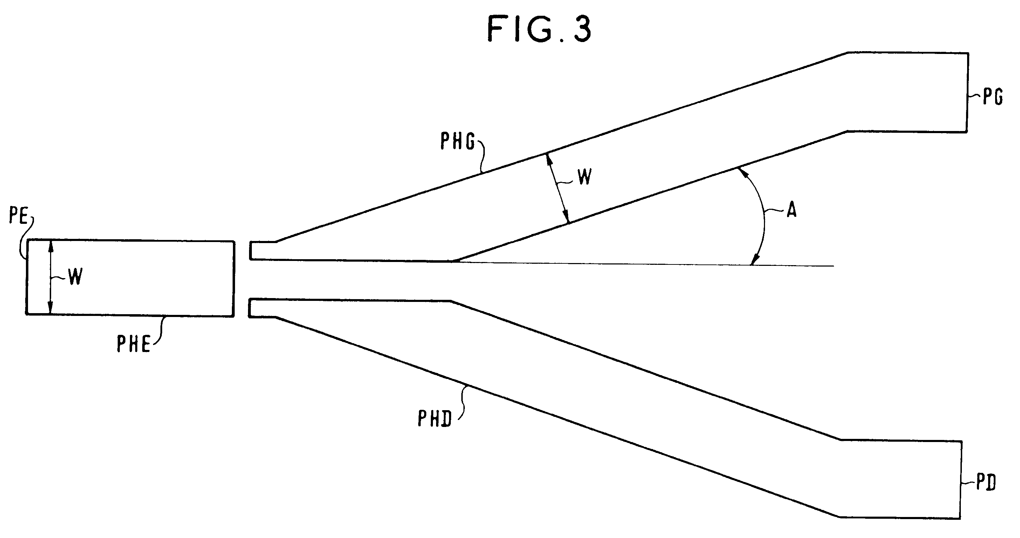

On va tout d'abord décrire, en se référant aux figures 1 et 2, des éléments qui appartiennent au commutateur selon l'invention et qui y assurent les mêmes fonctions que des éléments correspondants du commutateur connu, ces éléments étant dits ci-après "éléments communs". Lorsqu'un élément commun du commutateur connu est représenté sur la figure 3, il est désigné par la lettre P suivie par les signes de référence qui désignent l'élément commun correspondant du commutateur selon l'invention.

Un tel élément commun de commutateur selon la présente invention est une plaquette 2 (voir figure 1) cette plaquette est constituée d'un matériau, par exemple monocristallin et semiconducteur, transparent à une onde lumineuse à traiter, par exemple infrarouge. Un indice de réfraction d'au moins une couche de ce matériau est sensible à une action électrique, par exemple par variation de la densité de porteurs de charges injectés dans cette couche par un courant électrique ou extrait de celle-ci par une tension électrique. Cette plaquette s'étend de manière générale selon un plan de guidage 4 qui est par exemple horizontal. Elle comporte une succession verticale de couches horizontales qui sont les suivantes:
- Une couche de contact inférieure 20 à fort dopage d'un premier type de conductivité, par exemple du type n, au contact d'une électrode commune MC.
- Un substrat 22 par exemple de type n.
- Une couche guidante 24 présentant un indice de réfraction supérieur à celui de ce substrat.
- Une couche de confinement 26 présentant un indice de réfraction inférieur à celui de cette couche guidante. Cette couche de confinement présente une épaisseur complète dans l'étendue de trois guides de lumière constituant un guide d'entrée HE et deux guides de sortie HD et HG. En dehors de cette étendue cette couche a une épaisseur diminuée. Elle est surmontée par un milieu présentant un indice de réfraction inférieur à celui de cette couche et constitué typiquement par l'atmosphère de manière à assurer le guidage de ladite onde lumineuse par ces guides.
- Enfin une couche de contact supérieure 28 à fort dopage d'un deuxième type de conductivité opposé au premier, c'est-à-dire par exemple du type p. Cette couche de contact supérieure 28 est exclusivement présente là où la couche de confinement 26 a sa dite épaisseur complète. Des électrodes droite MD et gauche MG sont formées sur la couche de contact supérieure 28 dans l'étendue des guides de sortie HD et HG.

Dans le plan de guidage 4 la plaquette 2 présente:
- un côté arrière CR
- un côté avant CV,
- un axe OX (voir figure 2) portant des abscisses x1....x9 croissant de ce côté arrière à ce côté avant selon une direction longitudinale définie par cet axe ,
- un côté droit CD,
- un côté gauche CG, et
- une direction transversale DT joignant ce côté droit et ce côté gauche.

Des zones Z1...Z8 sont définies chacune par une dite abscisse ou entre deux dites abscisses.

Le commutateur comporte :
- une entrée E située dudit côté arrière pour recevoir ladite onde lumineuse,
- deux sorties D, G situées dudit côté avant pour restituer cette onde lumineuse, ces deux sorties constituant une sortie droite D située à droite dudit axe et une sortie gauche située G à gauche dudit axe,
- et un ensemble constitué par lesdits guides HE, HD, HG. Ces derniers sont formés dans le plan de guidage 4 pour guider cette onde de manière monomodale sur commande entre d'une part cette entrée et d'autre part l'une et/ou l'autre de ces deux sorties.

Chacun de ces guides s'étend linéairement en forme de ruban. Il a en chacun de ses points une largeur. Il a aussi deux bords, droit et gauche, dans ce plan de guidage. Sa largeur constitue une largeur normale W de ce guide lorsqu'elle est peu inférieure, par exemple comprise entre 50 % et 100 % d'une largeur de guidage multimodal au-dessus de laquelle ce guide pourrait guider ladite onde lumineuse de manière multimodale. Chaque tel bord présente dans chaque dite zone la forme générale d'un segment d'une droite associée à ce bord. Certains de ces bords sont parallèles à la direction longitudinale du commutateur. D'autres de ces bords présentent des inclinaisons par rapport à cette direction.

Cet ensemble de guides inclut :
- un guide d'entrée HE s'étendant selon l'axe OX avec une largeur normale de ce guide, entre une extrémité arrière constituant ladite entrée E et une extrémité avant HEV de ce guide, cette extrémité avant ayant une abscisse x3, ce guide d'entrée ayant des bords droit HED et gauche HEG,
- et deux guides de sortie, l'un droit HD et l'autre gauche HG, s'étendant en continuité optique avec le guide d'entrée à droite et à gauche de l'axe OX, à partir d'une abscisse de début de guides de sortie x4 au moins égale à l'abscisse x3 de l'extrémité avant du guide d'entrée, jusqu'aux deux sorties droites D et gauche G, respectivement.

Chacun de ces guides de sortie droit (ou gauche) comporte des segments se succèdant d'arrière en avant :
- Un segment récepteur droit SD1 (ou gauche SG1) correspondant à ce guide de sortie et s'étendant selon ladite direction longitudinale. Chacun de ces segments récepteurs occupe une zone de réception commandée Z5 s'étendant de ladite abscisse de début de guides de sortie x4 à une abscisse de divergence x5. Il a une largeur égale à une fraction inférieure à 50 % de ladite largeur de guide normale W. Il a aussi un bord externe droit SD1D (ou gauche SG1G) associé à la même droite que le bord droit HED (ou gauche HEG) du guide d'entrée HE. Il a enfin un bord interne gauche SD1G (ou droit SG1D) en regard du bord interne du segment récepteur de l'autre guide de sortie gauche (ou droit, respectivement). Un intervalle 6 est laissé entre les deux bords internes de ces deux segments récepteurs. Cet intervalle présente une largeur constante constituant une largeur de lacune normale LN.
- Enfin des segments divergents droits SD2...SD4 ou gauches SG2..SG4 correspondent auxdits guide de sortie et segment récepteur droit ou gauche. Ils s'étendent et se succédent à la fois vers l'avant et vers le côté droit (ou gauche, respectivement) à partir de ladite abscisse de divergence. Chaque segment divergent droit (ou gauche SG4) possède un bord externe droit (ou gauche SG4G) et un bord interne gauche (ou droit SG4D) respectivement. Les segments divergents successifs de chaque guide sortie droit (ou gauche) constituent un segment de sortie droit SD4 (ou gauche SG4), respectivement, dans une zone de sortie Z8 située à des abscisses x8, x9 substantiellement supérieures à l'abscisse de divergence x5. Les droites associées aux bords externe et interne SD4D, SD4G, SG4D, SG4G de chaque segment de sortie présentent une même inclinaison constituant une inclinaison normale A de ce segment de sortie. Elles rencontrent les droites associées aux bords externe et interne du segment récepteur correspondant à des abscisses de rencontre externe x5 et interne x7 respectivement. Dans l'exemple donné cette abscisse de rencontre externe est constituée par l'abscisse de divergence x5. La largeur de ces segments de sortie est une dite largeur normale W.

Pour l'onde lumineuse à traiter l'ensemble des guides d'entrée et de sortie constitue une structure guidante s'étendant du côté arrière CR au côté CV et présentant une largeur totale WT selon la direction transversale DT. Cette largeur totale constitue d'abord une dite largeur de guide normale W dans les zones Z1...Z5 occupées par le guide d'entrée HE et lesdits segments récepteurs SD1 et SG1 des guides de sortie. Puis elle croit progressivement vers l'avant à partir de l'abscisse de divergence x5.

Cette structure guidante présente pour le guidage de ladite onde lumineuse une lacune de guidage 6 s'étendant sur l'axe OX et ayant une largeur selon la direction transversale DT. Cette lacune de guidage 6 est présente aux abscisses x2....x9 qui sont supérieures à une abscisse de début de lacune x2 non supérieure à ladite abscisse de début de guides de sortie x4. Cette lacune est par contre absente aux abscisses xo inférieures à cette abscisse de début de lacune. Une largeur de lacune LH est définie à chaque abscisse. Elle est égale à largeur de la lacune de guidage ou elle est nulle selon que cette lacune de guidage est présente ou absente à cette abscisse. Cette largeur de lacune est donc nulle dans une zone d'entrée Z1 occupée par le guide d'entrée HE en-deçà de l'abscisse de début de lacune x2. Puis elle est égale à la largeur de lacune normale LN dans la zone de réception commandée Z5. Elle croit enfin dans la zone de sortie Z8 pour assurer un découplage progressif de deux modes de ladite onde lumineuse susceptibles d'être guidés respectivement par les deux dits guides de sortie, de sorte qu'au-delà d'une extrémité avant de cette zone de sortie ces deux guides de sortie cessent de coopérer pour constituer une structure guidante.

Un taux d'élargissement de lacune peut être défini pour chaque abscisse comme étant un taux de croissance de la largeur de lacune en fonction de l'abscisse. Ce taux est donc nul lorsque cette largeur de lacune reste nulle ou reste égale à la largeur de lacune normale. Dans la zone de sortie Z8 ce taux est défini par les inclinaisons normales et il constitue alors un taux normal d'élargissement de lacune. Plus particulièrement les inclinaisons des deux guides de sortie sont les mêmes, ces deux guides de sortie étant symétriques par rapport à l'axe OX et faisant un même angle A avec cet axe. Le taux normal d'élargissement de lacune vaut alors tg2A.

Les dispositions précédemment décrites font apparaître deux zones de transition, l'une d'entrée, l'autre de sortie, dans lesquelles le taux d'élargissement de lacune ainsi défini présente des variations:

La zone de transition d'entrée Z2, Z3, Z4 comporte les abscisses de début de lacune x2 et de début de guides de sortie x4. Dans cette zone des variations du taux d'élargissement de lacune en croissance et en décroissance font passer la largeur de lacune d'une valeur restant d'abord nulle dans la zone d'entrée Z1 à une valeur restant ensuite égale à la largeur de lacune normale LN dans la zone de réception commandée Z5.

La zone de transition de sortie Z7 inclue l'abscisse de rencontre interne x7. Elle fait passer le taux d'élargissement de lacune d'une valeur d'abord nulle au voisinage la zone de réception commandée Z5 à une valeur finale égale au taux normal d'élargissement de lacune dans la zone de sortie Z8.

L'électrode droite MD et l'électrode gauche MG sont formées respectivement sur les guides de sortie droit HD et gauche HG à partir de leurs segments récepteurs SD1 et SG1. Elles se continuent au moins jusqu'à une extrémité arrière de la zone de sortie Z8 et de préférence comme représenté jusqu'à une extrémité avant x9 de ces zones. Elles permettent d'exercer sélectivement dans ces guides les actions électriques qui sont nécessaires pour provoquer les modifications locales souhaitées des indices de réfraction de ces guides.

Le commutateur comporte enfin une source électrique 8, 10, 12 recevant un signal de commande J et fournissant en réponse aux électrodes un signal électrique I pour que lesdites modifications locales d'indices de réfraction couplent optiquement le guide d'entrée HE audit guide de sortie droit HD et/ou au guide de sortie gauche HG selon la valeur de ce signal de commande.

Plus particulièrement, dans l'exemple donné, le signal de commande J commande un commutateur électrique 12. Ce dernier active l'une des deux électrodes droite et gauche. Il la connecte pour cela à une source 8 fournissant potentiel positif par rapport à la masse constituée par l'électrode commune MC. Un courant passe alors à travers la plaquette 2 à partir de cette électrode activée et injecte des porteurs de charges dans la couche guidante 24.

L'électrode non activée est connectée à une source à potentiel négatif 10 pour réaliser une déplétion de porteurs sous cette électrode. L'indice de réfraction est ainsi rendu plus petit sous l'électrode activée et l'onde lumineuse à traiter reçue dans le guide HE passe dans celui des guides de sortie dont l'indice est le plus grand.

La largeur de séparation normale LN précédemment mentionnée a été choisie pour assurer l'isolation électrique mutuelle des deux électrodes droite MD et gauche MG dans la zone de réception commandée Z5.

Dans le cas du commutateur connu les guides d'entrée PHE et de sortie PHD et PHG ont la forme représentée à la figure 3.

Selon la présente invention l'une au moins des deux dites zones de transition est l'objet d'un aménagement qui modifie localement la largeur de la lacune de guidage, par rapport à ce qui été précédemment décrit, pour limiter la valeur maximale présentée par le taux d'élargissement de lacune dans cette zone. De tels aménagements peuvent avantageusement prendre l'une ou l'autre et de préférence l'ensemble de deux formes.

Selon que l'une ou/et l'autre des deux zones de transition est/sont aménagées. Ces deux formes apparaissent sur les figures 1 et 2.

Selon une première forme d'aménagement l'abscisse de début de lacune x1 est sensiblement inférieure à l'abscisse de l'extrémité du guide d'entrée x3. La zone de transition d'entrée Z2, Z3, Z4, s'étend alors à partir de cette abscisse de début de lacune x1 en incluant cette abscisse de l'extrémité du guide d'entrée x3 et en constituant une zone de transition amenagée. Le guide d'entrée occupe complètement sa largeur normale W dans la zone d'entrée Z1. La zone de transition d'entrée inclue une zone de formation de lacune Z2 s'étendant à partir de ladite abscisse de début de lacune x1. Le guide d'entrée HE se divise dans cette zone de formation de lacune en deux guides partiels droit SED et gauche SEG séparés par un évidement médian constituant un premier segment de la lacune de guidage 6. La largeur de cet évidement croit progressivement à partir de zéro à l'abscisse de début de lacune x1 jusqu'à la largeur de séparation normale LN à une abscisse de stabilisation de lacune x2.

Chaque guide partiel droit SED ou gauche SEG présente alors un bord respectivement gauche SEDG ou droit SEGD constituant un bord interne de ce guide partiel. Plus particulièrement ce bord interne est rectiligne et présente une inclinaison inférieure à ladite inclinaison normale A des segments de sortie SD4 et SG4. Cette inclinaison est typiquement comprise entre 1 et 10 milliradian.

De préférence la zone de transition d'entrée Z2, Z3, Z4 inclue en outre une zone de maintien de lacune Z3 s'étendant de l'abscisse de stabilisation de lacune x2 jusqu'à l'abscisse de l'extrémité avant du guide d'entrée x3. Dans cette zone de maintien de lacune l'évidement séparant les guides partiels droit SED et gauche SEG présente de manière constante ladite largeur de séparation normale LN.

Plus particulièrement cette zone de maintien de lacune Z3 présente une longueur comprise entre 10 % et 150 % de la longueur de la zone de formation de lacune Z2.

Cette première forme d'aménagement diminue les pertes optiques lorsque la lumière passe du guide d'entrée à celui des guides de sortie qui doit recevoir l'onde lumineuse à traiter. Cette diminution résulte du fait que le mode optique guidé par l'extrémité du guide d'entrée est mieux adapté à la forme du mode qui sera guidé par l'un des guides de sortie.

Selon une deuxième forme d'aménagement la zone de transition de sortie Z7 présente une étendue à partir d'une abscisse de début de transition de sortie x6 juqu'à une abscisse de fin de transition de sortie x8 pour constituer une zone de transition amenagée. Dans cette zone un segment divergent de chaque guide de sortie droit ou gauche est constitué par un segment de transition de sortie droit SD3 (ou gauche SG3) présentant un bord interne gauche SD3G (ou droit SG3D) en regard d'un bord interne droit (ou gauche) de l'autre segment de transition de sortie, gauche (ou droit, respectivement), et ces bords internes des segments de transition de sortie présentant des inclinaisons intermédiaires par exemple A/2 constituant des fractions de l'inclinaison normale A. De préférence l'abscisse de début de transition de sortie x6 est supérieure à l'abscisse de divergence x5.

Plus particulièrement le bord interne SG3D de chaque segment de transition de sortie SG3 est rectiligne et présente une inclinaison comprise entre 25 % et 75 % et de préférence égale à 50 % environ de l'inclinaison normale A. Ce segment de transition de sortie droit SD3 ou gauche SG3 présente un bord externe droit SD3D (ou gauche SG3G, respectivement). Ce bord externe est rectiligne et dans l'alignement du bord externe SD4D, SG4G du segment de sortie droit SD4 (ou gauche SG4 respectivement). De préférence le guide de sortie droit HD (ou gauche HG) comporte en outre un segment de divergence externe droit SD2 (ou gauche SG2) s'étendant dans une zone de divergence externe Z6 allant de l'abscisse de divergence x5 à l'abscisse de début de transition de sortie x6. Ce segment de divergence externe présente un bord interne rectiligne gauche SD2G (ou droit SG2D) dans l'alignement du bord interne SD1G, SG1D du segment récepteur droit SD1 (ou gauche SG1, respectivement), et un bord externe rectiligne droit SD2D (ou gauche SG2G) dans l'alignement du bord externe SD4D, SG4G, SD3D, SG3G du segment de sortie droit SD4 (ou gauche SG4) et du segment de transition de sortie droit SD3 (ou gauche SG3, respectivement). L'abscisse de début de transition de sortie x6 est de préférence telle que la largeur de chaque guide de sortie à cette abscisse soit comprise entre 30 % et 70 % et de préférence égale à 50 % environ de la largeur normale W de ce segment de sortie.

Cette deuxième forme d'aménagement diminue encore les pertes optiques du commutateur notamment à l'état pleinement commuté, c'est-à-dire lorsque toute le lumière de l'onde à traiter est restituée sur une seule des deux sorties.

De préférence, et comme connu la zone de transition d'entrée Z2, Z3, Z4 inclue en outre une zone de coupure de couche de contact Z4 présentant une étendue entre les abscisses d'extrémité avant du guide d'entrée x3 et de début de guides de sortie x4. La coupure de cette couche de contact supérieure 28 empêche un contact électrique parasite entre ces deux électrodes droite MD et gauche MG par l'intermédiaire de cette couche.

Pour faciliter de manière connue la réalisation du commutateur à l'aide de procédés d'auto-alignement, la couche de confinement 26 présente sa dite épaisseur diminuée dans cette zone de coupure de couche de contact. Ceci constitue une coupure parasite de la structure guidante optique. Mais la longueur de cette coupure est suffisamment petite pour que le fonctionnement optique du commutateur n'en soit pas sensiblement affecté.

Le commutateur selon l'invention donné en exemple est symétrique par rapport à son axe OX. Cependant, notamment dans le cas où un commutateur est dédié à des applications de sécurisation qui exigent l'absence de consommation électrique à l'état passif, c'est-à-dire en l'absence de signal de commande, tout en dirigeant la totalité de la lumière vers une seule des sorties, il convient d'utiliser un commutateur dissymétrique dont l'un des guides de sortie est plus large que l'autre. Il doit être compris que l'invention s'applique aussi avec avantage à un tel commutateur dissymétrique.

## Revendications

1. Commutateur optique à basculement dans lequel un guide d'entrée (HE) et deux guides de sortie divergents (HD, HG) constituent une structure guidante présentant entre ces deux guides de sortie un intervalle médian constituant une lacune de guidage (6), des électrodes (MC, MD, MG) permettant de commander sélectivement des indices de réfraction effectifs de ces deux guides de sortie pour coupler ce guide d'entrée à l'un et/ou l'autre de ces guides de sortie selon la valeur d'un signal de commande (J), ce commutateur étant caractérisé par le fait que ledit guide d'entrée se divise au voisinage desdits guides de sortie en deux guides partiels (SED, SEG) séparés par un évidement médian prolongeant ladite lacune de guidage.

2. Commutateur selon la revendication 1, caractérisé par le fait que ledit évidement médian du guide d'entrée (HE) présente, dans une zone constituant une zone de formation de lacune (Z2), une largeur croissant progressivement à partir de zéro jusqu'à une largeur égale à celle présentée par ladite lacune de guidage (6) entre lesdits guides de sortie (HD,HG) au voisinage de ce guide d'entrée.

3. Commutateur selon la revendication 2, caractérisé par le fait que des bords (SEDG, SEGD) dudit évidement médian présentent une inclinaison comprise entre 1 et 10 mrd dans ladite zone de formation de lacune (72) par rapport à un axe (OX) dudit guide d'entrée (HE).

4. Commutateur selon la revendication 2, caractérisé par le fait que, dans une zone de maintien de lacune (Z3) s'étendant à partir de ladite zone de formation de lacune (Z2) vers lesdits guides de sortie (HD, HG), ledit évidement médian du guide d'entrée présente une largeur constante égale à la largeur présentée par ladite lacune de guidage (6) entre ces guides de sortie au voisinage de ce guide d'entrée.

5. Commutateur selon la revendication 4, caractérisé par le fait que ladite zone de maintien de lacune (Z3) présente une longueur comprise entre 10% et 150% de la longueur de ladite zone de formation de lacune (Z2).

6. Commutateur optique à basculement dans lequel un guide d'entrée (HE) et deux guides de sortie divergents (HD, HG) constituent une structure guidante présentant entre ces deux guides de sortie un intervalle médian constituant une lacune de guidage (6), des électrodes (MC, MD, MG) permettant de commander sélectivement des indices de réfraction effectifs de ces deux guides de sortie pour coupler ce guide d'entrée à l'un et/ou l'autre de ces guides de sortie selon la valeur d'un signal de commande (J), les deux dits guides de sortie définissant des zones formant une succession (Z5...Z8) selon la longueur de ces guides à partir d'une extrémité de ces guides en regard dudit guide d'entrée (HE), ces deux guides de sortie ayant deux bords internes respectifs en regard l'un de l'autre, chacun de ces deux bords internes ayant dans chaque dite zone une inclinaison par rapport à un axe (OX) passant entre ces deux bords, cette inclinaison ayant une même valeur absolue et deux sens mutuellement opposés respectivement pour ces deux bords, cette valeur absolue constituant une valeur d'inclinaison, ladite succession de zones commençant par une zone (Z5) dans laquelle ladite valeur d'inclinaison est nulle, cette succession finissant par une zone (Z8) dans laquelle chacun desdits guides de sortie a une largeur constante et dans laquelle ladite valeur d'inclinaison est constante et constitue une valeur d'inclinaison normale (A) représentative d'une divergence de ces guides,
ce commutateur étant caractérisé par le fait que ladite succession de zones comporte au moins une zone intermédiaire (Z6, Z7) et que ladite valeur d'inclinaison croit le long de cette succession de zones en passant par au moins une valeur intermédiaire (A/2) entre ladite valeur d'inclinaison nulle et la dite valeur d'inclinaison normale.

7. Commutateur selon l'une quelconque des revendications 1 à 6, ce commutateur comportant une plaquette semiconductrice (2), lesdits guides d'entrée (HE) et de sortie (HD, HG) étant formés sur une face (4) de cette plaquette.

## Claims

1. Digital optical switch in which an input guide (HE) and two divergent output guides (HD, HG) constitute a guide structure having a median gap between said two output guides constituting a guide gap (6), electrodes (MC, MD, MG) controlling the effective refractive indices of said two output guides to couple said input guide to one or both output guides according to the value of a control signal (J), this switch being characterized in that said input guide is divided in the vicinity of said output guides into two partial guides (SED, SEG) separated by a median aperture extending said guide gap.

2. Switch according to claim 1, characterized in that said median aperture of the input guide (HE) has, in an area constituting a gap forming area (Z2), a width increasing progressively from a null width to a width equal to that of said guide gap (6) between said output guides (HD, HG) in the vicinity of said input guide.

3. Switch according to claim 2, characterized in that edges (SEDG, SEGD) of said median aperture have an inclination from 1 mrd to 10 mrd in said gap forming area (Z2) relative to an axis (OX) of said input guide (HE).

4. Switch according to claim 2, characterized in that, in a gap maintaining area (Z3) extending from said gap forming area (Z2) towards said output guides (HD, HG), said median aperture of said input guide has a constant width equal to the width of said guide gap 6 between said output guides in the vicinity of said input guide.

5. Switch according to claim 4, characterized in that said gap maintenance area (Z3) has a length between 10% and 150% of the length of said gap formation area (Z2).

6. Digital optical switch in which an input guide (HE) and two divergent output guides (HD, HG) constitute a guide structure having between said two output guides a median gap constituting a guide gap (6), electrodes (MC, MD, MG) for selectively controlling effective refractive indexes of these two output guides to couple said input guide to one and/or the other of said output guides according to the value of a control signal (J), said two output guides defining areas forming a succession (Z5 ... Z8) along the length of said guides from one end of said guides facing said input guide (HE), said two output guides having two respective inside edges facing each other, each of said two inside edges having in each of said areas an inclination relative to an axis (OX) passing between the two edges, this inclination having the same absolute value and two mutually opposite directions for the respective two edges, said absolute value constituting an inclination value, said succession of areas beginning with an area (Z5) in which said inclination has a null value, said succession finishing in an area (Z8) in which each of said output guides has a constant width and in which said inclination value is constant and constitutes a nominal inclination value (A) representative of a divergence of said guides,
said switch being characterized in that said succession of areas includes at least one intermediate area (Z6, Z7) and in that said inclination value increases along this succession of areas, passing through at least one intermediate value (A/2) between said null value and said nominal inclination value.

7. Switch according to any of claims 1 to 6, said switch including a semiconductor wafer (2), said input guide (HE) and output guides (HD, HG) being formed on one face (4) of said wafer.

## Patentansprüche

1. Optischer Schalter, bei dem ein Eingangsleiter (HE) und zwei divergierende Ausgangsleiter (HD, HG) eine Führungsstruktur bilden, die zwischen diesen zwei Ausgangsleitern einen mittigen Zwischenraum aufweist, der eine Führungslücke (6) bildet, wobei Elektroden (MC, MD, MG) es ermöglichen, selektiv effektive Brechungsindizes dieser zwei Ausgangsleiter zu steuern, um diesen Eingangsleiter an den einen und/oder den anderen dieser Ausgangsleiter je nach dem Wert eines Steuersignals (J) zu koppeln, dadurch gekennzeichnet, dass der Eingangsleiter in der Nähe der Ausgangsleiter in zwei Teilleiter (SED, SEG) verzweigt, die durch eine mittige Ausnehmung getrennt sind, die die Führungslücke verlängert.

2. Schalter nach Anspruch 1, dadurch gekennzeichnet, dass die mittige Ausnehmung des Eingangsleiters (HE) in einer Zone, die eine Lückenbildungszone (Z2) darstellt, eine Breite aufweist, die progressiv von Null bis zu einer Breite gleich derjenigen anwächst, die die Führungslücke (6) zwischen den Ausgangsleitern (HD, HG) in der Nähe dieses Eingangsleiters hat.

3. Schalter nach Anspruch 2, dadurch gekennzeichnet, dass Ränder (SEDG, SEGD) der mittigen Ausnehmung eine Neigung zwischen 1 und 10 mrd in der Lückenbildungszone (Z2) in Bezug auf eine Achse (OX) des Eingangsleiters (HE) aufweisen.

4. Schalter nach Anspruch 2, dadurch gekennzeichnet, dass eine Lückenerhaltzungszone (Z3), die sich von der Lückenbildungszone (Z2) zu den Ausgangsleiters (HD, HG) erstreckt, dass die mittige Ausnehmung des Eingangsleiters eine konstante Breite gleich der Breite aufweist, die die Führungslücke (6) zwischen diesen Ausgangsleitern in der Nähe dieses Eingangsleiters hat.

5. Schalter nach Anspruch 4, dadurch gekennzeichnet, dass die Lückenerhaltungszone (Z3) eine Länge von zwischen 10% und 150% der Länge der Lückenbildungszone (Z2) aufweist.

6. Optischer Schalter, bei dem ein Eingangsleiter (HE) und zwei divergierende Ausgangsleiter (HD, HG) eine Führungsstruktur bilden, die zwischen diesen zwei Ausgangsleitern einen mittigen Zwischenraum aufweist, der eine Führungslücke (6) bildet, wobei Elektroden (MC, MD, MG) es ermöglichen, selektiv effektive Brechungsindizes dieser zwei Ausgangsleiter zu steuern, um diesen Eingangsleiter an den einen und/oder den anderen dieser Ausgangsleiter je nach Wert eines Steuersignals (J) zu koppeln, wobei die zwei Ausgangsleiter Zonen definieren, die eine Folge (Z5 ... Z8) in Längsrichtung dieser Leiter von einem dem Eingangsleiter (HE) zugewandten Ende dieser Leiter aus bilden, wobei diese zwei Ausgangsleiter zwei einander zugewandte Innenränder haben, wobei jeder dieser zwei Innenränder in jeder besagten Zone eine Neigung in Bezug auf eine zwischen diesen zwei Rändern verlaufende Achse (OX) hat, die einen gleichen Betrag und zwei entgegengesetzte Richtungen jeweils für die zwei Ränder hat, wobei dieser Betrag einen Neigungswert darstellt, wobei die Folge von Zonen mit einer Zone (Z5) beginnt, in der dieser Neigungswert 0 ist und die Folge mit einer Zone (Z8) endet, in der jeder dieser Ausgangsleiter eine konstante Breite hat und in der der Neigungswert konstant ist und einen für eine Divergenz dieser Leiter repräsentativen normalen Neigungswert (A) darstellt, dadurch gekennzeichnet,
dass die Folge von Zonen wenigstens eine Zwischenzone (Z6, Z7) umfasst, und dass der Neigungswert entlang dieser Folge von Zonen zunimmt und dabei über wenigstens einen Zwischenwert (A/2) zwischen dem Neigungswert 0 und dem normalen Neigungswert verläuft.

7. Schalter nach einem beliebigen der Ansprüche 1 bis 6, mit einer Halbleiterplatte (2), wobei die Eingangs-(HE) und Ausgangsleiter (HD, HG) auf einer Fläche (4) dieser Platte gebildet sind.
